# EUROPÄISCHE PATENTSCHRIFT

(11) **EP 2 481 965 B1**
(45) Veröffentlichungstag und Bekanntmachung des Hinweises auf die Patenterteilung: **18.09.2013**
(21) Anmeldenummer: 12153086.9
(22) Anmeldetag: 30.01.2012
(51) Int. Cl.: F16L 11/127, F16L 11/22, F16L 9/12

(54) **Kunststoffrohrbündel mit elektrischem Leiter**
Plastic pipe bundle with electric cable
Faisceau de tuyau en matière synthétique avec conducteur electrique

(30) Priorität: 01.02.2011 DE 102011000432
(43) Veröffentlichungstag der Anmeldung: 01.08.2012
(73) Patentinhaber: egeplast international GmbH, 48268 Greven (DE)
(72) Erfinder: Wolter, Ralf, 48477 Hörstel (DE)
(74) Vertreter: Fritz, Edmund Lothar

(56) Entgegenhaltungen:
- EP-A1- 0 881 730
- US-A- 4 399 319

## Beschreibung

### Kunststoffrohr oder Kunststoffrohrbündel

Die vorliegende Erfindung betrifft ein Kunststoffrohr oder Kunststoffrohrbündel, insbesondere für die Verlegung im Erdreich, umfassend wenigstens eine Innenschicht oder einen Rohrkern aus Kunststoff sowie wenigstens eine die Innenschicht oder den Rohrkern umhüllende Außenschicht oder Schutzschicht aus Kunststoff, wobei wenigstens ein elektrischer Leiter in dem Bereich zwischen Innenschicht und Außenschicht verlegt ist, wobei mindestens zwei Rohrkerne aus Kunststoff von einer gemeinsamen Außenschicht oder Schutzschicht umhüllt werden.

Kunststoffrohre für unterirdische Rohrleitungen werden heute zunehmend durch grabenlose Verlegung in das Erdreich eingebracht, da es sich hier um ein kostengünstiges Verfahren mit kürzerer Verlegezeit handelt. In der Regel wird dabei zunächst eine (horizontale) Bohrung in das Erdreich eingebracht und anschließend wird die Rohrleitung durch diese Bohrung in das Erdreich eingezogen.

Um bei der grabenlosen Verlegung die Rohre besser vor Beschädigung zu schützen, ist es aus dem Stand der Technik bekannt (siehe beispielsweise DE 203 05 112 U1, US 4 399 319 oder EP 0 881 730 A) thermoplastische Rohre mit zusätzlichem Schutzmantel aus Kunststoff wie beispielsweise einem Polyolefin für die grabenlose Verlegung zu verwenden. Ziel der additiven Verschleißschicht der Rohrleitungen ist der Schutz der drucktragenden Rohrleitung vor unzulässigen Beschädigungen durch Riefen, Kratzer und flächigen Abtragungen während der grabenlosen Verlegeverfahren.

Um nach der Verlegung festzustellen, ob es zu einer relevanten Beschädigung des Kunststoffrohrs gekommen ist, wird in der DE 20 2004 002 641 U 1 ein Prüfsystem für erdverlegte Rohre vorgeschlagen, bei dem ein oder mehrere, in oder auf die Wandung des Rohres wendelfömig aufgebrachte elektrische Leiter dazu verwendet werden, um festzustellen, ob die Wandung des Rohres beschädigt ist. Eine Weiterentwicklung dieses Prüfsystems und des Verfahrens zur grabenlosen Verlegung von Kunststoffrohren ist in der EP 1 564 366 A 1 beschrieben. Derartige Prüfsysteme werden insbesondere für mehrschichtige Rohre mit einer Schutzmantelschicht der vorgenannten Art verwendet. Bei dem bekannten System wird zur Prüfung des Rohres am einen Ende des Rohres an den Leiter einmalig eine Stromquelle angeschlossen und am anderen Ende wird eine Anzeigevorrichtung angeschlossen, um danach festzustellen, ob der Stromdurchfluss durch den Leiter unterbrochen ist. Aus einer solchen Unterbrechung des Stromdurchflusses kann dann auf eine Beschädigung der Rohrleitung beispielsweise durch einen scharfkantigen Gegenstand während des Verlegeverfahrens geschlossen werden.

In der DE 10 2006 033 961 A1 ist ein Verfahren zur Ortung einer Beschädigung eines Kunststoffrohres beschrieben, bei dem eine Sonde durch das Kunststoffrohr bewegt wird und elektromagnetische Wellen abstrahlt, die induktiv in die Leiter eingekoppelt werden und Messsignale erzeugen, wobei diese Messsignale in einer Messeinrichtung ausgewertet werden, um eine Beschädigung des Rohres zu erfassen.

Die DE 6 96 14 125 T 2 beschreibt ein Rohr aus unterschiedlichen Materialien mit einer durch Extrusion aus Kunststoff hergestellten innersten Schicht, einer außerhalb dieser angeordneten inneren Elektrodenschicht, einer außerhalb dieser angeordneten Isolierschicht aus geschäumten Kunststoff, und einer außerhalb dieser angeordneten äußeren Elektrodenschicht. Die äußere Elektrodenschicht kann aus einem elektrisch leitenden Kunststoff oder einer Aluminiumfolie bestehen. Bei diesem bekannten Rohr wird bei einer Beschädigung der Rohrwandung durch einen elektrisch leitenden Gegenstand, beispielsweise durch einen Nagel, ein Kurzschluss verursacht und so der Benutzer gewarnt, dass eine Beschädigung vorliegt. Das bekannte Rohr kommt eher für beispielsweise Gasleitungen in Betracht, die im Inneren von Gebäuden verlegt sind. Durch die Verwendung einer Schaumstoffschicht handelt es sich nicht um ein normgerechtes Rohr für eine Erdverlegung im Außenbereich.

Aus der DE 10 2007 031 761 A1 ist ein Kunststoffrohrbündel bekannt, bei dem mindestens zwei Rohre über eine Verbundschnur aus Kunststoff miteinander verbunden sind. Die Verbundschnur kann dabei einen elektrischen Leiter umfassen, der beispielsweise als Detektionsdraht oder zur Übertragung elektrischer Daten genutzt werden kann. Bei dieser bekannten Lösung befindet sich die Verbundschnur mit dem darin befindlichen elektrischen Leiter außen auf dem Rohrbündel, dass heißt außerhalb der Schutzhülle der Rohre und ist somit gegen mechanische Einflüsse ungeschützt. Dies ist insbesondere bei einer grabenlosen Verlegung eines solchen Rohrbündels, bei der die Rohre in das Erdreich eingezogen werden, ungünstig, da dabei die Rohre starker mechanischer Belastung unterworfen werden und die Gefahr besteht, dass die Verbundschnur von dem Rohrbündel abgerissen oder beschädigt wird.

In der DE 20 2005 016 324 U1 ist ein einzelnes Kunststoffrohr der eingangs genannten Gattung beschrieben, bei dem ein elektrischer Leiter aus Aluminium in Form eines flachen Aluminiumbands in Wendelform, also spiralförmig, um die Innenschicht eines Polyethylenrohrs gewickelt ist, wobei der elektrische Leiter anschließend mit einer harten Außenschicht überdeckt wird, die einen festen Verbund mit der Innenschicht eingeht, so dass sich bei dem fertigen Rohr der Leiter zwischen den beiden Schichten eines zweischichtigen Rohrs befindet. Bei diesem bekannten Kunststoffrohr wird die so genannte "aktive Ortung" einer Beschädigung der Rohrleitung durchgeführt. Der wendelförmige Aluminium-Leiter wird dazu mit elektromagnetischer Strahlung beaufschlagt, die sich in dem Leiter bis zu der Fehlstelle fortpflanzt, wobei ein Anteil der elektromagnetischen Wellen reflektiert wird und aus den dadurch entstandenen Interferenzen auf den Abstand der Fehlstelle vom Ende des Kunststoffrohrs geschlossen werden kann. Man kann auch den Leiter mit einer Wechselspannung beaufschlagen und von der Erdoberfläche aus ein Magnetfeld messen und aus einer Unterbrechung im Magnetfeld auf eine dortige Beschädigung der Rohrleitung schließen.

Die DE 297 24 702 U1 beschreibt ein Kunststoffrohrbündel mit den Merkmalen der eingangs genannten Gattung. Es handelt sich um einen flexiblen Rohrverbund aus einzelnen Kunststoffrohren, wobei die untereinander benachbarten Rohre längsverlaufend linienförmig aneinanderliegen und von einer Deckschicht aus Kunststoff umgeben sind. In dem Hohlraum zwischen der Berührungslinie der im Verbund liegenden Einzelrohre und dem zugeordneten Deckschichtbereich sind elektrische Leiter eingebracht, die jedoch unmittelbar an der Mantellinie der Einzelrohre und somit parallel zu deren Achse verlaufend verlegt sind.

Einen ähnlichen Stand der Technik beschreibt die EP 0 079 787 A1. Hier handelt es sich um einen thermisch isolierten flexiblen Kompositschlauch für wärmeübertragende Medien in Heizungsanlagen. Der Schlauch ist in sich sehr biegsam und verdrillbar, so dass er gegebenenfalls eine flache tordierte Konfiguration einnimmt. Im Gegensatz dazu sind erdverlegte Rohre aus Kunststoff für beispielsweise Wasser-, Abwasser- und Gasleitungen aufgrund ihrer Wandstärken und der Werkstoffeigenschaften biegesteif und manuell nicht verformbar. Diese Rohre müssen entsprechenden Normen genügen und den beim Einziehen in das Erdreich einwirkenden Kräften sowie Druckbelastungen aus dem transportierten Medium standhalten.

Problematisch bei den bekannten Lösungen ist, dass es bei mangelnder Bauausführung zu Fehlern, beispielsweise einem Bruch des Leiterdrahts oder zu Korrosion an einer Verbindungsstelle kommen kann. Hierdurch wird der durchgängige Kontakt zur Ortung bereits bei der Verlegung der Rohrleitung an einer Stelle unterbrochen. Wenn dies festgestellt wird, ist die Herstellung einer Brücke, um die Fehlstelle zu beheben, schwierig, da dazu der Leiter aus dem Produkt geführt werden muss, aber im Bereich des Defekts nicht genug Leitermaterial vorhanden ist.

Die Aufgabe der vorliegenden Erfindung besteht darin, ein weiter verbessertes Kunststoffrohrbündel der eingangs genannten Gattung zur Verfügung zu stellen, welches die vorgenannten Probleme des Standes der Technik überwindet.

Die Lösung dieser Aufgabe liefert ein Kunststoffrohrbündel der eingangs genannten Gattung mit den kennzeichnenden Merkmalen des Hauptanspruchs.

Erfindungsgemäß ist vorgesehen, dass der wenigstens eine elektrische Leiter sich parallel zur Achse der beiden Rohrkerne erstreckend und in sich wellenförmig oder zickzackförmig verlaufend unterhalb der Außenschicht verlegt ist.

Anders als in dem vorgenannten Stand der Technik windet sich der Leiter nicht spiralförmig (helikal) um die Rohrachse, sondern hat eine grundsätzlich lineare Erstreckung parallel zur Rohrachse. Allerdings verläuft der Leiter im Rahmen dieser linearen Grundrichtung in sich wellenförmig oder zickzackförmig, wodurch pro Längeneinheit der Rohrleitung mehr Leiterlänge zur Verfügung steht. Durch diese wellenförmige oder zickzackförmige Verlegung des Leiters wird das Überbrücken einer Verbindung erleichtert, denn es ist jeweils eine Überlänge des Leiters vorhanden. Wenn der Leiter aus dem Produkt ausgeführt werden muss, kommt es nicht zum Bruch des Leiters. Die Zugspannung und/oder Biegespannung auf den Leiter werden stark reduziert. Ebenso wird die Fehleranfälligkeit reduziert und es kommt nicht mehr zum Abriss des Leiters. Außerdem betrifft die vorliegende Erfindung Kunststoffrohrbündel, bei denen mindestens zwei Kernrohre vorhanden sind, die von wenigstens einer gemeinsamen Außenschicht oder Schutzschicht umgeben werden.

Im Rahmen der vorliegenden Erfindung sind metallische Leiter jeglicher Art mit ausreichender elektrischer Leitfähigkeit verwendbar, vorzugsweise solche aus Kupfer oder Edelstahl.

Die Herstellung eines Kunststoffrohrbündels der erfindungsgemäßen Art kann beispielsweise erfolgen, indem man zunächst zwei oder mehrere Produkt-Kernrohre extrudiert, diese zusammenfasst oder bündelt, wenigstens einen Leiter durch geeignete Werkzeugelemente wellenförmig oder zickzackförmig einbringt oder die Wellenform oder Zickzackform vorher herstellt und dann einen Schutzmantel, der als Außenrohr dient, auf die Anordnung aufextrudiert.

Wenn man beispielsweise ein Rohrbündel aus zwei Kernrohren bildet, die sich am Umfang berühren oder nahe aneinander grenzen und man diese Anordnung dann mit einer beide Rohre überspannenden Ummantelung umgibt, dann ergeben sich dort wo die Ummantelung etwa tangential liegt, Freiräume zwischen den beiden Rohren und der Ummantelung und in derartigen Freiräumen kann man beispielsweise einen elektrischen Leiter verlegen, so dass auch der Leiter innerhalb der beiden Rohren gemeinsamen Ummantelung (Außenschicht) liegt.

Eine mögliche bevorzugte Lösungsvariante im Rahmen der vorliegenden Erfindung sieht vor, dass das Kunststoffrohrbündel wenigstens einen weiteren nicht isolierten metallischen Leiter umfasst, der zwischen Kernrohren und Außenschicht oder Schutzmantel wellenförmig, zickzackförmig, gerade oder um die Kernrohre gewickelt eingebracht ist. Man kann beispielsweise eine Perforation der Außenschicht im Bereich dieses nicht isolierten Leiters vorsehen. Dieser Leiter wird durch die Feuchte des umgebenden Erdreichs quasi geerdet. Hierdurch entsteht eine optimale Erdfühligkeit. Das erfindungsgemäße Kunststoffrohrbündel eignet sich somit auch zur passiven Ortung.

An den wellenförmig verlegten isolierten Leiter kann man beispielsweise eine permanente Spannung anlegen. Kommt es zu einer Beschädigung der Außenschicht des Kunststoffrohres, ist dann mittels der Messeinrichtung oder einer Anzeigeeinrichtung eine Detektion der Beschädigungstelle möglich. Das erfindungsgemäße Kunststoffrohrbündel eignet sich somit zur aktiven und zur passiven Ortung.

Die vorliegende Erfindung bezieht sich auf mehrschichtige, das heißt mindestens zweischichtige Kunststoffrohre mit mindestens einer Innenschicht und einer Außenschicht, wobei die Außenschicht bevorzugt eine Verschleißschutzschicht ist. Die Außenschicht oder Mantelschicht ist somit vorzugsweise eine Schutzschicht, die die Rohre des Rohrbündels bei der grabenlosen Verlegung im Erdreich gegen mechanische Einflüsse schützt. Die erfindungsgemäß zu verwendenden wellenförmig oder zickzackförmig verlegten elektrischen Leiter werden insbesondere zwischen Innenschicht und Außenschicht angeordnet, das heißt also in diesem Fall zwischen den Kernrohren des Rohrbündels und der Außenschicht oder Schutzschicht, die alle Rohre des Rohrbündels umhüllt. Man kann alternativ zur oben genannten Methode gegebenenfalls auch den oder die Leiter in einen äußeren Randbereich der Innenschicht oder in einen inneren Randbereich der Außenschicht einbetten. Dabei liegt der nichtisolierte Leiter getrennt oder parallel in Wellenform, zickzackförmig oder gerade. Man kann beispielsweise eine Perforation der Außenschicht im Bereich dieses nicht isolierten Leiters vorsehen. Dieser Leiter wird durch die Feuchte des umgebenden Erdreichs quasi geerdet. Hierdurch entsteht eine optimale Erdfühligkeit. Das erfindungsgemäße Kunststoffrohrbündel eignet sich somit auch zur passiven Ortung.

Man kann beispielsweise auch ein dreischichtiges oder mehrschichtiges Rohr aus Kunststoff herstellen, bei dem der oder die elektrischen Leiter in eine mittlere Schicht (Zwischenschicht) zwischen der Innenschicht und der Außenschicht eingebettet sind. Die Kernrohre müssen nicht einschichtig sein, sondern können vielmehr bereits aus mehrschichtigen Rohren bestehen.

Das erfindungsgemäße Kernrohr kann bevorzugt wenigstens eine Schicht aus einem Polyolefin aufweisen oder teilweise oder auch vollständig aus Polyolefinen bestehen. Die Außenschicht des Kunststoffrohrbündels, mit der die Kernrohre ummantelt werden, kann nach der Herstellung des Kunststoffrohrbündels über einen Teil deren Umfangs jeweils mit den Kernrohren stoffschlüssig miteinander verbunden sein. Das Kernrohr besteht in der Regel aus einer oder mehreren tragenden Schichten und sollte daher so konzipiert sein, dass je nach Verwendung des Rohrs (beispielsweise als Trinkwasserleitung, Abwasserleitung, Gasleitung, Leerrohr, Kabelschutzrohr etc.) die einschlägigen nach der Norm vorgegebenen Parameter eingehalten werden. Die Kernrohre können beispielsweise Leerrohre oder Schutzrohre für erdverlegte Leitungssysteme sein, beispielsweise für Glasfaserleitungen.

Als Leiter kommen im Rahmen der vorliegenden Erfindung beispielsweise Drähte, 2-adrige Drähte (symmetrisch verdrillt) oder Bänder (Flachband) in Betracht.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte perspektivische Darstellung eines Rohrbündels gemäß einer möglichen beispielhaften Variante der vorliegenden Erfindung;
Figur 2 eine schematisch vereinfachte Seitenansicht eines Kunststoffrohrbündels gemäß der Ausführungsvariante von Figur 1;
Figur 3 eine schematisch vereinfachte perspektivische Ansicht eines Rohrbündels gemäß einer alternativen Ausführungsvariante der Erfindung;
Figur 4 eine schematisch vereinfachte perspektivische Ansicht eines Rohrbündels gemäß einer weiteren alternativen Ausführungsvariante der Erfindung;
Figur 5 eine schematisch vereinfachte perspektivische Ansicht eines Rohrbündels gemäß einer weiteren alternativen Ausführungsvariante der Erfindung.

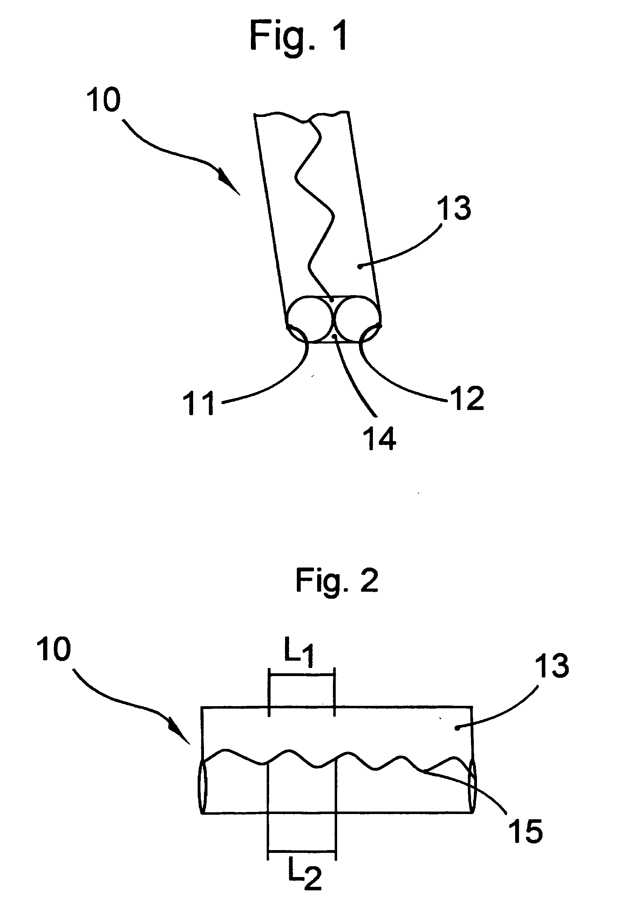

Nachfolgend wird zunächst auf Figur 1 Bezug genommen. Diese zeigt in schematisch vereinfachter Darstellung eine perspektivische Darstellung eines Rohrbündels gemäß der vorliegenden Erfindung, welches insgesamt mit dem Bezugszeichen 10 bezeichnet ist. Dieses Rohrbündel umfasst zwei Kernrohre 11, 12, bei denen es sich um Rohre für Medien wie Wasser, Abwasser, Gas etc. oder um Leerrohre, Kabelschutzrohre oder dergleichen handeln kann. Entsprechend dem jeweiligen Anwendungszweck sind diese Kernrohre 11, 12 normgerecht aus ein oder mehreren Schichten aus Kunststoff ausgebildet und diese sind tragende Rohre. Beide Kernrohre 11, 12 werden von einer gemeinsamen Außenschicht 13, umhüllt, die beide Kernrohre 11, 12 umspannt und zu einem einzigen Kunststoffrohrbündel 10 bündelt. Beide Kernrohre 11, 12 liegen vergleichsweise eng benachbart zueinander, vorzugsweise liegen sie so, dass sie sich an einer Stelle ihres Umfangs berühren wie man in der Zeichnung erkennt. Dadurch, dass die gemeinsame Außenschicht 13 nur partiell jeweils am äußeren Umfang der einzelnen Kernrohre 11, 12 anliegt, ergeben sich in etwa dreieckige Freiräume 14, die genügend Platz bieten, um dort wenigstens einen erfindungsgemäßen elektrischen Leiter 15 unterzubringen, und zwar so, dass dieser innerhalb der Außenschicht 13 liegt und somit von dieser geschützt wird gegen mechanische Einflüsse, wenn beispielsweise ein solches Rohrbündel grabenlos verlegt und dazu in das Erdreich eingezogen wird.

Der elektrische Leiter 15 erstreckt sich in Längsrichtung des Rohrbündels und im Prinzip ist seine generelle Erstreckung parallel zur jeweiligen Achse der beiden Kernrohre 11, 12. Jedoch verläuft der elektrische Leiter 15 nicht geradlinig, sondern in einer Wellenlinie. Alternativ kann auch die Verlegung in eine Zickzacklinie erfolgen. Der dadurch gegebene Vorteil wird nachfolgend unter Bezugnahme auf die Figur 2 näher erläutert.

Figur 2 zeigt eine Seitenansicht des Rohrbündels von Figur 1, wiederum in schematisch vereinfachter Darstellung. Man sieht, dass im Bereich einer bestimmten Länge L₁ der Rohrleitung (axiale Länge des Rohrbündels10) aufgrund der wellenförmigen Verlegung die tatsächliche Länge L₂ des innerhalb der Außenschicht verlegten Leiters 15 um einiges größer ist als die Länge L₁. Wenn man somit die Außenschicht 13 in diesem Bereich auftrennen würde, könnte man den dann zugänglichen elektrischen Leiter 15 in die Länge ziehen, da durch die wellenförmige Verlegung eine Überlänge an Leiter vorhanden ist. Dies erleichtert zum Beispiel das Überbrücken einer Verbindung und reduziert Zugspannungen, die auf den elektrischen Leiter einwirken.

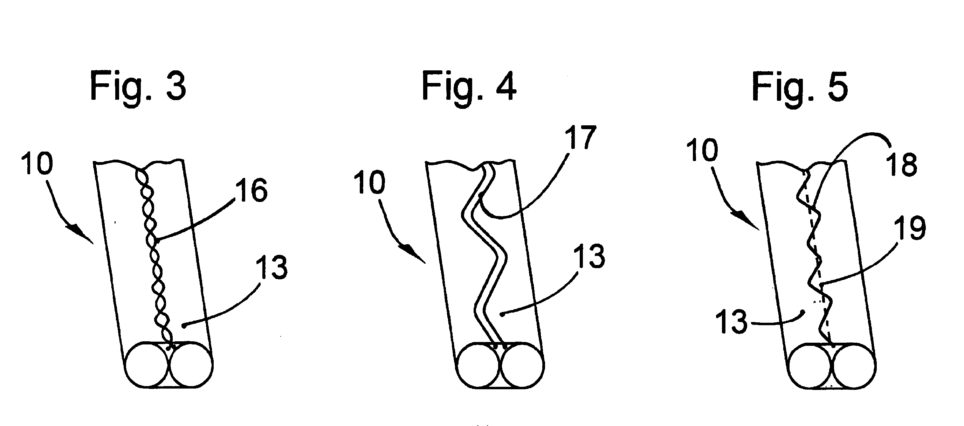

Nachfolgend wird unter Bezugnahme auf Figur 3 eine weitere alternative Ausführungsvariante der Erfindung erläutert. In diesem Fall sind in dem Freiraum zwischen den beiden Kernrohren und der Außenschicht 13 anstelle eines zwei Leiter 16 wellenförmig verlegt, wobei die beiden Leiter miteinander verdrillt sind bzw. sich umeinander winden. Beide Leiter 16 haben auch hier eine wellenförmige Erstreckung, so dass wiederum die Überlängen vorhanden sind, wobei sich jedoch die gesamte Anordnung der beiden verdrillten Leiter innerhalb des Freiraums zwischen Kernrohren und Außenschicht erstreckt und zwar in Längsrichtung parallel zu den Achsen der beiden Kernrohre.

Nachfolgend wird unter Bezugnahme auf Figur 4 eine weitere alternative Ausführungsvariante der Erfindung erläutert. In diesem Fall sind in dem Freiraum zwischen den beiden Kernrohren und der Außenschicht 13 wiederum zwei Leiter 17 wellenförmig verlegt, wobei die beiden Leiter 17 jedoch anders als in dem zuvor beschriebenen Ausführungsbeispiel nicht miteinander verdrillt sind, sondern so wellenförmig verlegt sind, dass die beiden Wellen in etwa gleich (etwa parallel zueinander) laufen.

Nachfolgend wird unter Bezugnahme auf Figur 5 eine weitere alternative Ausführungsvariante der Erfindung erläutert. In diesem Fall ist in dem Freiraum zwischen den beiden Kernrohren und der Außenschicht 13 ein nicht isolierter elektrischer Leiter 18 wellenförmig verlegt. In dem Bereich wo dieser wellenförmig verlegte elektrische Leiter 18 verläuft ist die Außenschicht 13 mit einer beispielsweise etwa linienförmigen Perforation 19 versehen, so dass dort nach der Verlegung des Rohrbündels 10 Feuchtigkeit aus dem umgebenden Erdreich eindringen kann und dadurch der nicht isolierte elektrische Leiter 18 quasi geerdet wird. Dies kann man beispielsweise nutzen, wenn man einen zweiten isolierten Leiter (nicht dargestellt) in dem Rohrbündel verlegt, um so auf dem Wege einer passiven Ortung eine Fehlstelle in der Rohrleitung zu detektieren.

### Bezugszeichenliste

- 10: Rohrbündel
- 11: Kernrohr
- 12: Kernrohr
- 13: Außenschicht
- 14: Freiraum
- 15: elektrischer Leiter
- 16: verdrillte elektrische Leiter
- 17: elektrische Leiter
- 18: nicht isolierter Leiter
- 19: Perforation

## Patentansprüche

1. Kunststoffrohrbündel (10), insbesondere für die Verlegung im Erdreich, umfassend wenigstens zwei Rohrkerne (11, 12) aus Kunststoff sowie wenigstens eine die Rohrkerne umhüllende gemeinsame Außenschicht (13) aus Kunststoff, wobei wenigstens ein elektrischer Leiter (17) in dem Bereich zwischen Rohrkernen und Außenschicht verlegt ist, **dadurch gekennzeichnet, dass** der wenigstens eine elektrische Leiter (17) sich parallel zur Achse der beiden Rohrkerne erstreckend und in sich wellenförmig oder zickzackförmig verlaufend unterhalb der Außenschicht verlegt ist.

2. Kunststoffrohrbündel nach Anspruch 1, **dadurch gekennzeichnet, dass** wenigstens ein elektrischer Leiter (17) im Bereich des Raums (14) verlegt ist, der sich zwischen zwei sich am Umfang berührenden oder aneinandergrenzenden Rohren des Rohrbündels und der diese überspannenden Ummantelung der Außenschicht ergibt.

3. Kunststoffrohrbündel nach Anspruch 1 oder 2, **dadurch gekennzeichnet, dass** dieses zwei oder mehrere extrudierte Kernrohre (11, 12) umfasst, die zusammenfasst oder gebündelt wurden, wenigstens einen Leiter (17), der wellenförmig oder zickzackförmig außerhalb der Kernrohre eingebracht wurde und wenigstens einen Schutzmantel, der als Außenschicht (13) dient und auf die Anordnung aus Kernrohren und Leiter aufextrudiert ist.

4. Kunststoffrohrbündel nach einem der Ansprüche 1 bis 3, **dadurch gekennzeichnet, dass** dieses wenigstens einen weiteren nicht isolierten metallischen Leiter (17) umfasst, der zwischen Kernrohre (11, 12) und Außenschicht oder Schutzmantel wellenförmig, zickzackförmig, gerade oder um die Kernrohre gewickelt eingebracht ist.

5. Kunststoffrohrbündel nach einem der Ansprüche 1 bis 4, **dadurch gekennzeichnet, dass** dieses wenigstens einen weiteren metallischen nicht isolierten Leiter (17) umfasst, der auf die Außenschicht oder den Schutzmantel aufgebracht und durch einen diesen abdeckende Folie aus Kunststoff versiegelt ist.

6. Kunststoffrohrbündel nach einem der Ansprüche 1 bis 5, **dadurch gekennzeichnet, dass** mindestens zwei miteinander verdrillte isolierte metallische Leiter (17) zwischen den Kernrohren (11, 12) und der Außenschicht (13) oder dem Schutzmantel angeordnet sind.

7. Kunststoffrohrbündel nach Anspruch 4 oder 5, **dadurch gekennzeichnet, dass** die Außenschicht (13) oder der Schutzmantel im Bereich des weiteren nicht isolierten metallischen Leiters (17) eine Perforation (19) aufweist.

## Claims

1. A plastic pipe bundle (10), in particular for installation in the ground, comprising an inner layer or two pipe cores (11, 12) of plastic as well as at least one common outer layer (13) of plastic, which encloses the pipe cores, wherein at least one electrical conductor (17) is installed in the area between pipe cores and outer layer, **characterized in that** the at least one electrical conductor (17) is installed below the outer layer so as to extend parallel to the axis of the two pipe cores and so as to run in a wavelike or zigzag-like manner.

2. The plastic pipe bundle according to claim 1, **characterized in that** at least one electrical conductor (17) is installed in the area of the space (14), which results between two pipes of the pipe bundle, which contact one another or adjoin one another on the circumference, and the jacket of the outer layer, which spans them.

3. The plastic pipe bundle according to claim 1 or 2, **characterized in that** the latter comprises two or more extruded core pipes (11, 12), which were combined or bundled, at least one conductor (17), which was installed in a wavelike or zigzag-like manner outside of the core pipes and at least one protective jacket, which serves as outer layer (13) and which is extruded onto the arrangement of core pipes and conductor.

4. The plastic pipe bundle according to one of claims 1 to 3, **characterized in that** the latter comprises at least one further non-insulated metallic conductor (17), which is introduced between core pipes (11, 17) and outer layer or protective jacket in a wavelike, zigzag-like, straight manner or so as to be wound around the core pipes.

5. The plastic pipe bundle according to one of claims 1 to 4, **characterized in that** the latter comprises at least a further metallic, non-insulated conductor (17), which is applied to the outer layer or the protective jacket and which is sealed by means of a film of plastic, which covers said conductor.

6. The plastic pipe bundle according to one of claims 1 to 5, **characterized in that** at least two insulated metallic conductors (17), which are twisted with one another, are arranged between the core pipes (11, 12) and the outer layer (13) or the protective jacket.

7. The plastic pipe bundle according to claim 4 or 5, **characterized in that** the outer layer (13) or the protective jacket encompasses a perforation (19) in the area of the further non-insulated metallic conductor (17).

## Revendications

1. Faisceau de tubes en plastique (10), en particulier destiné à être posé sous terre, comprenant au moins deux noyaux de tube en plastique (11, 12) et au moins une couche extérieure commune (13) en plastique enveloppant les noyaux de tube, dans lequel au moins un conducteur électrique (17) est posé dans la région située entre les noyaux de tube et la couche extérieure, **caractérisé en ce que** l'au moins un conducteur électrique (17) est posé en s'étendant parallèlement à l'axe des deux noyaux de tube et en évoluant en forme d'ondes ou en forme de zigzags sous la couche extérieure.

2. Faisceau de tubes en plastique selon la revendication 1, **caractérisé en ce qu'**au moins un conducteur électrique (17) est posé dans la région de l'espace (14) apparaissant entre deux tubes du faisceau de tubes adjacents ou se touchant sur le pourtour et l'enveloppe de la couche extérieure encerclant ceux-ci.

3. Faisceau de tubes en plastique selon la revendication 1 ou 2, **caractérisé en ce que** celui-ci comprend deux ou plusieurs tubes centraux (11, 12) extrudés, qui ont été réunis ou mis en faisceau, au moins un conducteur (17) introduit en forme d'ondes ou en forme de zigzags à l'extérieur des tubes centraux, et au moins une enveloppe de protection servant de couche extérieure (13) et extrudé sur l'ensemble constitué des tubes centraux et du conducteur.

4. Faisceau de tubes en plastique selon l'une des revendications 1 à 3, **caractérisé en ce que** celui-ci comprend au moins un autre conducteur métallique non-isolé (17) introduit entre les tubes centraux (11, 12) et la couche extérieure ou l'enveloppe de protection, en forme d'onde, en forme de zigzags, droit ou enroulé autour des tubes centraux.

5. Faisceau de tubes en plastique selon l'une des revendications 1 à 4, **caractérisé en ce que** celui-ci comprend au moins un autre conducteur métallique non-isolé (17) appliqué sur la couche extérieure ou l'enveloppe de protection et scellé par un film en plastique recouvrant celle-ci.

6. Faisceau de tubes en plastique selon l'une des revendications 1 à 5, **caractérisé en ce qu'**au moins deux conducteurs isolés torsadés ensemble (17) sont agencés entre les tubes centraux (11, 12) et la couche extérieure (13) ou l'enveloppe de protection.

7. Faisceau de tubes en plastique selon la revendication 4 ou 5, **caractérisé en ce que** la couche extérieure (13) ou l'enveloppe de protection comporte une perforation (19) dans la région de l'autre conducteur métallique non-isolé (17).
